# EUROPÄISCHE PATENTSCHRIFT

(11) **EP 1 623 554 B1**
(45) Veröffentlichungstag und Bekanntmachung des Hinweises auf die Patenterteilung: **03.12.2008**
(21) Anmeldenummer: 04730217.9
(22) Anmeldetag: 29.04.2004
(51) Int. Cl.: H04L 29/06

(54) **Verfahren zur Datenübertragung& x9;**
Method for data transmission& x9;
Procédé de transmission de données

(30) Priorität: 05.05.2003 DE 10320091
(43) Veröffentlichungstag der Anmeldung: 08.02.2006
(73) Patentinhaber: 1&1 Internet AG, 56410 Montabaur (DE)
(72) Erfinder: SCHNECK, Andreas, 76474 Au am Rhein (DE)
(74) Vertreter: DTS München
(86) Internationale Anmeldenummer: PCT/EP2004/004568
(87) Internationale Veröffentlichungsnummer: WO 2004/100489

(56) Entgegenhaltungen:
- WO-A-02/10943
- US-A1- 2001 044 835
- US-A1- 2002 161 913
- US-B1- 6 243 761
- XP000805935

## Beschreibung

### Gebiet der Erfindung

Die vorliegende Erfindung betrifft allgemein die Übertragung von Daten zwischen Rechnersystemen über ein Netzwerk, wie zum Beispiel zwischen dem Server eines Internet-Providers und einem Computersystem eines Nutzers von Dienstleistungen des Internet-Providers über das Internet. Insbesondere betrifft die vorliegende Erfindung ein Verfahren, um die Qualität solcher Datenübertragungen zu ermitteln.

### Hintergrund der Erfindung

Bei der Übertragung von Daten über ein Netzwerk, wie zum Beispiel dem Internet, ist eine wesentliche Größe für die Übertragungsqualität, die Geschwindigkeit, mit der Daten von dem sendenden Rechnersystem zu dem empfangenden Rechnersystem übertragen werden. Dabei werden Datenübertragungsgeschwindigkeiten oder -raten unter anderem von der minimalen Bandbreite der Übertragungsstrecke zwischen den zwei beteiligten Rechnersystemen und durch die zwei Rechnersysteme selbst, insbesondere durch das empfangende Rechnersystem, beeinflusst.

Angesichts der zunehmenden Datenmengen, die beispielsweise über das Internet zu Computersystemen von Internet-Benutzern übertragen werden, kommt dieser Größe in zunehmendem Maße Bedeutung zu. Insbesondere aus Sicht eines Internet-Benutzers ist es erwünscht, dass bei Datenübertragungen aus dem Internet keine für den Internet-Benutzer wahrnehmbare Verzögerungen auftreten. Um solche unerwünschten Effekte für den Benutzer zu verhindern, ist es derzeit üblich, beispielsweise im Bereich des Internets auf Webpages darzustellende grafische Darstellungen, insbesondere Werbemittel, hinsichtlich der dafür benötigten Daten einzuschränken. Beispielsweise werden derzeit Werbemittel in Form von Bannern auf Datenmengen von bis zu 20 KB beschränkt. Dies hat wiederum den Nachteil, dass es, wenn man bei diesem Beispiel bleibt, Werbetreibenden nicht möglich ist, hochqualitative, hochauflösende, animierte grafische Darstellungen, Videosequenzen und Musik in hoher Qualität zu verwenden, die zur Werbung über das Internet übermittelt werden sollen.

Eine Möglichkeit, Datenübertragungen über ein Netzwerk unter Berücksichtigung der technischen Eigenschaften einer zur Verfügung stehenden Übertragungstrecke zu optimieren, besteht darin, dass von einem Rechnersystem, zu dem Daten übertragen werden sollen, vor einer Datenübertragung zu dem die Daten sendenden Rechnersystem entsprechende Informationen übermittelt werden. Nachteilig ist hierbei, dass, wenn solche Informationen nicht übermittelt werden, Datenübertragungen nicht entsprechend optimiert werden können. Ferner ist es hierbei üblicherweise erforderlich, dass diese Informationen von einem Benutzer des zum Empfang vorgesehenen Rechnersystems in dieses eingegeben und unter Steuerung des Benutzers zu dem sendenden Rechnersystem übertragen werden.

Im Bereich des Internets ist es ferner bekannt, Datenübertragungen anzupassen, indem anhand der IP-Adresse eines zum Empfang vorgesehenen Rechnersystems überprüft wird, welche technischen Eigenschaften hinsichtlich Datenübertragungen seitens des Rechnersystems vorliegen werden, um die Identifikation "schneller User" zu ermöglichen. Dabei werden im Allgemeinen von Internet-Providern bereitgestellte IP-Adressen "schneller User" (z.B. Internet-Benutzer mit DSL-Modem) verwendet, deren Bezug und Verwendung aber kostenpflichtig ist.

Ferner hat diese auch als IP-Targeting bezeichnete Vorgehensweise den Nachteil, dass anhand einer IP-Adresse oftmals nicht auf die entsprechenden technischen Eigenschaften des zum Empfang vorgesehenen Rechnersystems geschlossen werden kann. IP-Adressen sind nämlich nicht zwingend einem bestimmten Internet-Benutzer zugeordnet, sondern es kann eine IP-Adresse nacheinander unterschiedlichen Benutzern zugeordnet werden. Wenn beispielsweise viele Internet-Benutzer mittels eines DSL-Modems auf das Internet zugreifen, ist es aufgrund der beschränkten Anzahl verfügbarer IP-Adressen üblich, diesen Internet-Benutzern IP-Adressen zuzuordnen, die eigentlich für Internet-Benutzer mit langsamen Modems vorgesehen sind. In einem solchen Fall kann ein Internet-Benutzer mit einem schnellen Modem nicht als solcher erkannt werden.

Ein weiterer Nachteil besteht darin, dass anhand einer IP-Adresse oftmals nicht auf die Daten-übertragungseigenschaften einer zur Verfügung stehenden Übertragungstrecke geschlossen werden kann. So erlaubt eine IP-Adresse beispielsweise keine Aussagen darüber, welche Bandbreite zu Datenübertragungen seitens des Netzwerks zur Verfügung steht und wie ein zum Empfang vorgesehenes Rechnersystem ausgelastet ist. Im Fall des zuvor genannten Beispiels von Werbebannern kann dies beispielsweise dazu führen, dass ein Internet-Benutzer, der aufgrund seiner IP-Adresse als "schneller User" identifiziert wurde, einen großen Werbebanner, d.h. einen auf einer großen Datenmenge basierenden Banner, erhält, obwohl die zur Verfügung stehende Bandbreite hierfür nicht ausreicht; in der Folge wird der Werbebanner auf einem Monitor dieses Internet-Benutzers verzögert aufgebaut.

In der US 6,243,761 B1 wird ein System vorgeschlagen, bei dem nach Messung der Übertragungsgeschwindigkeit entschieden wird, welche Dateien übertragen werden sollen.

In der US 2001/0010059 A1 wird eine Testdatei übertragen, um die Übertragungsgeschwindigkeit zu messen. Danach wird entschieden, welche Datei übertragen werden soll.

Gemäß US 2002/011658 A1 wird die Bandbreite bestimmt, die für Datenübertragungen über das Internet zwischen einem Server und einem Computersystem eines Internet-Benutzers zur Verfügung steht, zu dem die Daten übertragen werden sollen.

Hierbei wird in einem ersten Schritt eine erste Datenmenge zu dem Computersystem übertragen und die Zeitdauer gemessen, die benötigt wird, um diese Datenmenge vollständig von dem Server zu dem Computersystem zu übermitteln. Aus der benötigten Zeitdauer zur Übertragung der Datenmenge wird dann die Bandbreite bestimmt. Ist die so bestimmte Bandbreite ausreichend, um beispielsweise eine graphische Darstellung hoher Auflösung in einer für den Internet-Benutzer akzeptablen Weise, d.h. schnell genug, auf dem Computersystem darzustellen, wird auf dem Computersystem eine erste Softwareanwendung gewählt und ausgeführt, die für diese Darstellung geeignet ist.

Ist die so bestimmte Bandbreite nicht ausreichend, wird in einem zweiten Schritt eine zweite Datenmenge von dem Server über das Internet zu dem Computersystem übertragen und die Bandbreite erneut bestimmt. Ist die im zweiten Schritt bestimmte Bandbreite ausreichend, um beispielsweise eine grafische Darstellung mit geringerer Auflösung auf dem Computersystem wiederzugeben, wird eine hierfür geeignete, zweite Softwareanwendung auf dem Computersystem gewählt und ausgeführt.

Ist die im zweiten Schritt ermittelte Bandbreite nicht ausreichend, kann in einem dritten Schritt die Bandbreite unter Verwendung einer dritten Datenmenge erneut bestimmt werden, um entweder eine hierfür geeignete, dritten Softwareanwendung auszuführen oder eine weitere Bandbreitenmessung durchzuführen.

Ist in Abhängigkeit der zuletzt bestimmten Bandbreite eine Softwareanwendung auf dem Computersystem ausgewählt worden, werden die mit der ausgewählten Softwareanwendung wiederzugebenden Daten von dem Server zu dem Computersystem übertragen.

Diese Vorgehensweise hat mehrere Nachteile. Ein wesentlicher Aspekt dieser Vorgehensweise ist es, die durch das Netzwerk bereitgestellte Bandbreite zu ermitteln. Um dies zu erreichen, werden weitere Faktoren, die die Zeitdauer zur Übertragung der zur Bandbreitenbestimmung verwendeten Datenmengen beeinflussen können, so berücksichtigt, dass die bei der Bandbreitenbestimmung verwendete Zeitdauer im wesentlichen der tatsächlichen Übertragungsdauer über das Internet auf Grund der dort zur Verfügung stehenden Bandbreite entspricht.

Dies kann dazu führen, dass aufgrund einer zuletzt bestimmten Bandbreite eine Softwareanwendung auf dem Computersystem gewählt und ausgeführt und Daten zu dem Computersystem übertragen werden, die angesichts der zuletzt bestimmten Bandbreite geeignet sind, aber aus anderen Gründen ungeeignet sind, weil sie beispielsweise zu einer für den Internet-Benutzern nicht befriedigenden Dauer bei der Darstellung der übertragenen Daten führen. Dies kann beispielsweise der Fall sein, wenn einerseits zwar eine hohe Bandbreite zur Datenübertragung zur Verfügung steht, aber andererseits das Computersystem empfangene Datenmengen nicht schnell genug verarbeiten kann; dies insbesondere kann durch ein mit dem Computersystem verwendetes Verfahren zum Zwischenspeicher empfangener Daten ("Cachen") verursacht werden.

Des Weiteren ist es bei dieser Vorgehensweise erforderlich, einerseits die Bandbreite zu bestimmen und andererseits danach die entsprechend der Bandbreite gewählten Daten zu übertragen.

Gemäß US 2001/0044835 A1 wird die Bandbreite bei einer Datenübertragung, die für eine Datenübertragung zwischen einem Server und einem Computersystem eines Internet-Benutzers zur Verfügung steht, bestimmt. In Abhängigkeit der bestimmten Bandbreite werden die zu dem Computersystem des Internet-Benutzers zu übertragenden Inhalte bzw. diesen entsprechende Datenmengen gewählt. Zur Bestimmung der Bandbreite wird eine vorbestimmte Datenmenge von dem Server zu dem Computersystem übertragen und die dabei benötigte Übertragungsdauer gemessen. Die dabei verwendete vorbestimmte Datenmenge umfasst ausschließlich zur Bandbreitenmessung benötigte Daten; zu übertragende Inhalte wiedergebende Daten werden dabei nicht übertragen.

Vergleichbar dem zuletzt genannten Verfahren wird in gemäß W03/007171 A1 die Bandbreite ermittelt, die für Datenübertragungen zwischen einem Server und einem Computersystem eines Internet-Benutzers zur Verfügung steht. Insbesondere ist es vorgesehen, Testdaten von dem Server zu dem Computersystem über einen Signalweg zu übertragen, dessen Bandbreite bestimmt werden soll. Danach werden in einem von der Bandbreitenmessung getrennten Schritt für den Internet-Benutzer vorgesehene Inhalte übertragen, die gemäß der bestimmten Bandbreite gewählt werden.

Bei den zuletzt genannten bekannten Ansätzen besteht ein Nachteil darin, dass Änderungen der zur Verfügung stehenden Bandbreite nach der Bandbreitebestimmung nicht mehr berücksichtigt werden können. Dies kann beispielsweise dazu führen, dass gemäss einer bestimmten Bandbreite gewählte zur Übertragung vorgesehene Daten übertragen werden, bei deren Übertragung aber eine Bandbreite zur Verfügung steht, die von der bestimmten Bandbreite so abweicht, dass aus den ursprünglich geeigneten Daten ungeeignete Daten werden.

Ferner besteht bei den obengenannten Ansätzen ein Nachteil darin, dass sie lediglich in Abhängigkeit von Charakteristika, d. h. im speziellen der Bandbreite, einer Übertragungstrecke zwischen einem Server und einem Computersystem eines Internet-Benutzers durchgeführt werden. Andere Faktoren, die die Qualität solcher Datenübertragungen beeinflussen können, bleiben da- bei unberücksichtigt.

### Aufgabe der Erfindung

Aufgabe der vorliegenden Erfindung ist es, Lösungen bereitzustellen, um Datenübertragungen über ein Netzwerk, insbesondere über das Internet, hinsichtlich der zur Verfügung stehenden Datenübertragungsqualität zu optimieren. Insbesondere soll es die vorliegende Erfindung ermöglichen, bei Datenübertragungen über ein Netzwerk diese so durchzuführen, dass sie gemäss einer tatsächlich vorliegenden Datenübertragungsqualität durchgeführt werden.

### Kurzbeschreibung der Erfindung

Zur Lösung dieser Aufgabe stellt die vorliegende Erfindung ein Verfahren bereit, bei dem bei einem Übertragen erster Daten für einen Empfänger über ein Netzwerk das Übertragen der ersten Daten abgebrochen und durch ein Übertragen zweiter Daten für den Empfänger ersetzt wird, wenn beim Übertragen der ersten Daten ein Datenübertragungsgrenzwert verletzt wird wobei die bereits übertragenen ersten Daten für die Wiedergabe der zweiten Daten verwendet werden.

Unter den ersten und zweiten Daten für den Empfänger sind Nutzdaten zu verstehen, d. h. Daten, die zur tatsächlichen Verwendung/Nutzung seitens des Empfängers vorgesehen sind. Bei dem Empfänger kann es sich sowohl um ein Rechnersystem handeln, zu dem die ersten und, ggf., die zweiten Daten übertragen werden, um einen Benutzer eines die Daten empfangenden Rechnersystems als auch um ein die Daten empfangendes Rechnersystem und ein Benutzer desselben in Kombination.

Bei den ersten und zweiten Daten handelt es sich insbesondere um eine oder mehrere Dateien oder ein Datenpaket zur tatsächlichen Nutzung seitens des Empfängers, d. h. um Nutzdaten. Besonders bevorzugt handelt es sich um eine graphische Datei wie beispielsweise ein Werbebanner.

Zur Veranschaulichung der Bedeutung der ersten und zweiten Daten für den Empfänger wird auf bekannte Verfahren Bezug genommen, die, wie oben erläutert, beispielsweise zum Bestimmen einer bei einer Datenübertragung verfügbaren Bandbreite eine vorbestimmte Datenmenge oder Testdaten über ein Netzwerk übertragen. Die bei diesen bekannten Verfahren verwendeten Daten sind nicht im eigentlichen Sinn für einen Empfänger vorgesehen, sondern dienen einem anderen Zweck, beispielsweise der Ermittlung einer Bandbreite; diese Daten umfassen keine beim oder zum Betrieb eines empfangenden Rechnersystems gewünschten oder erforderlichen Daten (z.B. auf dem Rechnersystem auszuführende Softwareanwendungen, wiederzugebenden Informationen, Grafiken, Text, etc.) und Daten, die von einem Benutzer eines empfangenden Rechnersystems genutzt werden können.

Im Gegensatz dazu umfassen die ersten und zweiten Daten für den Empfänger Daten, die von einem empfangenden Rechnersystem und/oder dessen Benutzer verwendet werden können. Abgesehen von Daten der ersten und zweiten Daten, die beispielsweise zur Übertragung über das Netzwerk oder zur Verarbeitung der ersten und zweiten Daten von einem empfangenden Rechnersystem benötigt werden, können die ersten und zweiten Daten für den Empfänger als Daten verstanden werden, die "ausschließlich" Daten umfassen, die von einem empfangenden Rechnersystem und/oder dessen Benutzer tatsächlich genutzt werden können; dementsprechend können die ersten und zweiten Daten für den Empfänger als Daten verstanden werden, die beispielsweise aus einer auf einem empfangenden Rechnersystem auszuführenden Softwareanwendung oder Text- und/oder Bildinformationen bestehen, die auf einem Monitor eines empfangenden Rechnersystems einem Benutzer zur Verfügung gestellt werden.

Unter einem Datenübertragungsgrenzwert ist im Folgenden beispielsweise eine Größe zu verstehen, die die Qualität einer Übertragung von Daten über das Netzwerk charakterisiert. Der Datenübertragungsgrenzwert kann beispielsweise ein Schwellwert sein, dessen Verletzung angibt, dass die Qualität der Datenübertragung über das Netzwerk für das Übertragen der ersten Daten nicht ausreicht. Anstelle eines Schwellwerts kann der Datenübertragungsgrenzwert auch einen Bereich angeben, dessen Verletzung eine hinsichtlich der ersten Daten nicht ausreichende Datenübertragungsqualität angibt.

Falls der Datenübertragungsgrenzwert einen Schwellwert angibt, ist unter einer Verletzung des Datenübertragungsgrenzwerts sowohl ein Unterschreiten als auch ein Überschreiten des Schwellwerts zu verstehen. Falls der Datenübertragungsgrenzwert einen Bereich angibt, liegt eine Verletzung des Datenübertragungsgrenzwerts vor, wenn die Übertragung der ersten Daten mit einer Qualität durchgeführt wird, die innerhalb des Bereichs oder außerhalb des Bereichs liegt.

Das erfindungsgemäße Verfahren hat mehrere Vorteile. Datenübertragungen über ein Netzwerk werden nicht nur in Abhängigkeit der zur Datenübertragung verwendeten Übertragungsstrecke durchgeführt. Vielmehr erlaubt es die vorliegende Erfindung, Datenübertragungen über ein Netzwerk unter Berücksichtigung der insgesamt vorhandenen Datenübertragungsqualität durchzuführen. Des Weiteren ist es bei dem erfindungsgemäßen Verfahren nicht mehr erforderlich, speziell zur Ermittlung einer Datenübertragungsqualität vorgesehene Daten, beispielsweise in Form von Testdaten, zu verwenden. Vielmehr werden bei dem erfindungsgemäßen Verfahren die Daten, nämlich die ersten Daten, die zur empfängerseitigen Verwendung/Nutzung dienen, auch zu Ermittlung der Datenübertragungsqualität verwendet.

Ein weiterer Vorteil der vorliegenden Erfindung besteht darin, dass die Ermittlung einer Datenübertragungsqualität nicht zeitlich getrennt von der Übertragung von Daten erfolgt, die für einen Empfänger vorgesehen sind. Vielmehr fallen bei dem erfindungsgemäßen Verfahren die Ermittlung einer Datenübertragungsqualität und die Übertragung von für einen Empfänger vorgesehenen Daten zeitlich zusammen. Mit dem erfindungsgemäßen Verfahren ist es möglich, während einer Übertragung von für einen Empfänger vorgesehenen Daten eine "Momentaufnahme" der aktuellen Datenübertragungsqualität zu erhalten.

Bei einer bevorzugten Ausführungsform wird das Übertragen der ersten Daten fortgesetzt, wenn der Datenübertragungsgrenzwert nicht verletzt wird. Dies hat den Vorteil, dass der Zeitraum, der benötigt wird, um die ersten Daten vollständig zu übertragen, nicht durch eine vorher durchgeführte Übertragung von Daten zur Ermittlung einer Datenübertragungsqualität verzögert wird.

Um Datenübertragungen feiner abgestuft an die vorhandene Datenübertragungsqualität anzupassen, ist es vorgesehen, wenigstens zwei Datenübertragungsgrenzwerte vorzugeben. Die oben hinsichtlich des Datenübertragungsgrenzwerts gemachten Ausführungen gelten entsprechend für diese wenigstens zwei Datenübertragungsgrenzwerte. Dabei ist es vorgesehen, dass wenigstens zwei zweite Daten vorgegeben werden. Beim Übertragen der ersten Daten wird dann geprüft, welcher der wenigstens zwei Datenübertragungsgrenzwerte verletzt wird. Abhängig davon, welcher der wenigstens zwei Datenübertragungsgrenzwerte verletzt wird, werden von den wenigstens zwei zweiten Daten die zweiten Daten ausgewählt, die angesichts des verletzten Datenübertragungsgrenzwerts geeignet sind.

Diese Vorgehensweise ermöglicht es, mittels einer Überprüfung der Datenübertragungsqualität, nämlich bei der anfänglichen Übertragung der ersten Daten, die vorhandene Datenübertragungs-qualität genauer zu ermitteln. Wählt man beispielsweise eine hohe Anzahl gering beabstandeter Datenübertragungsgrenzwerte, kann die Datenübertragungsqualität beliebig exakt bestimmt werden. Sollen beispielsweise nur erste oder zweite Daten vollständig übertragen werden, reicht es im Prinzip aus, lediglich einen Datenübertragungsgrenzwert zu definieren. Sollen Aussagen über die vorhandene Datenübertragungsqualität darüber hinaus verwendet werden oder sind genauere Aussagen über die vorhandene Datenübertragungsqualität erwünscht, ist es vorteilhaft auch bei Verwendung von lediglich ersten und zweiten Daten mehr als einen Datenübertragungsgrenzwert vorzugeben.

Beispielsweise ist es möglich, einen ersten und einen zweiten Datenübertragungsgrenzwert vorzugeben und diesen erste zweite Daten bzw. zweite zweite Daten zuzuordnen. Wird bei der Übertragung der ersten Daten festgestellt, dass der erste Datenübertragungsgrenzwert verletzt wird, werden nach dem Abbruch der Übertragung der ersten Daten die ersten zweiten Daten übertragen. Wird der zweite Datenübertragungsgrenzwert verletzt, werden nach dem Abbruch der Übertragung der ersten Daten die zweiten zweiten Daten übertragen.

Bei einer Ausführungsform kann eine Verletzung des Datenübertragungsgrenzwerts vorliegen, wenn beim Übertragen der ersten Daten innerhalb einer vorgegebenen Zeitdauer eine Datenmenge übertragen wird, die kleiner als eine vorgegebene Datenmenge ist.

Bei einer anderen Ausführungsform kann eine Verletzung des Datenübertragungsgrenzwerts vorliegen, wenn eine Zeitdauer unterschritten wird, die benötigt wird, um eine von den ersten Daten umfasste vorgegebene Datenmenge zu übertragen.

Die Verletzung des Datenübertragungsgrenzwerts kann beispielsweise angeben, dass die zur Verfügung stehende Datenübertragungsqualität nicht ausreicht, um die ersten Daten in gewünschter Form übertragen, d.h. die Datenübertragungsqualität nicht ausreicht, um die ersten Daten schnell genug zu übertragen.

Da bei der Verletzung des Datenübertragungsgrenzwerts nicht die ersten Daten insgesamt, sondern lediglich eine vorgegebene Datenmenge zu Grunde gelegt wird, ist es auch nicht erforderlich, zur Bestimmung der Datenübertragungsqualität die ersten Daten vollständig zu übertragen. Vielmehr kann die Ermittlung der Datenübertragungsqualität sehr schnell durchgeführt werden, beispielsweise so, dass, wenn es zu einem Abbruch der Übertragung der ersten Daten kommt, ein Empfänger für die ersten Daten dies nicht wahrnehmen kann.

In diesen Fällen umfassen die ersten Daten insgesamt vorzugsweise eine größere Menge als die zweiten Daten.

Alternativ zu der Ersten der beiden zuletzt genannten Ausführungsformen ist es vorgesehen, dass eine Verletzung des Datenübertragungsgrenzwerts vorliegt, wenn beim Übertragen der ersten Daten innerhalb einer vorgegebenen Zeitdauer eine Datenmenge übertragen wird, die größer als eine vorgegebene Datenmenge ist.

Alternativ dazu ist es vorgesehen dass eine Verletzung eines Datenübertragungsgrenzwerts angibt, dass beim Übertragen einer von den ersten Daten umfassten ersten vorgegebenen Datenmenge eine vorgegebene Zeitdauer unterschritten wurde.

In diesen Fällen umfassen bei der zweiten Alternative die ersten Daten insgesamt eine kleinere Datenmenge als die zweiten Daten.

Vorzugsweise geben die ersten Daten einen ersten Banner und die zweiten Daten einen zweiten Banner an. Ferner ist es möglich, dass die vorgegebene Datenmenge des ersten Banners und die zweiten Daten in Kombination mit der vorgegebenen Datenmenge einen zweiten Banner angeben.

Unter einem Banner werden im Folgenden grafische Informationen verstanden, die in der Wiedergabe einer aktuellen Webpage auf einem Monitor eines zum Zugriff auf die aktuelle Webpage verwendeten Rechnersystems dargestellt werden. Banner werden in für Webpages verwendete HTML-Dokumente eingebunden und können in unterschiedlichen Größen und auf unterschiedliche Weise dargestellt werden.

Standardisierte Bannergrößen umfassen sogenannte Fullsize-Banner mit einer Größe von 468 * 60 Pixel und sogenannte Halfsize-Banner mit einer Größe von 234 * 60 Pixel, ist mittlerweile aufgegeben worden. Es haben sich mittlerweile aber einige weitere Größen als besonders geeignet ausgestellt und werden bevorzugt eingesetzt, wie z.B. der sogenannte Big-Size-Banner mit einer Größe von 728 * 90 Pixel.

Ferner wird zwischen animierten und statischen Bannern unterschieden. Animierte Banner können auf Daten im GIF-Format basieren und/oder mittels dem unter dem Handelsnamen Flash^{®} bekannten Softwareprogramm und/oder unter Verwendung des unter dem Handelsnamen Shockwave® bekannten Grafikformats erstellt sein. Umgangssprachlich werden Banner oftmals zusammenfassend als Flash-Banner bezeichnet, weshalb im Folgenden unter dieser Bezeichnung nicht nur mit dem Flash®-Softwareprogramm erzeugte, sondern auch damit vergleichbare Banner verstanden werden.

Für den Fall, dass die ersten Daten eine größere Datenmenge umfassen als die zweiten Daten, kann der erste Banner größer als der zweite Banner sein. Entsprechendes gilt für den Fall, wenn die ersten Daten eine kleinere Datenmenge als die zweiten Daten umfassen. Dabei wird bevorzugt, dass der zweite Banner bei unzureichender Datenübertragungsqualität aus Sicht des Empfängers als Ersatz für den ersten Banner dient oder umgekehrt.

Vorzugsweise werden Daten, die den verletzten Datenübertragungsgrenzwert charakterisieren, gespeichert. Hierfür kann beispielsweise ein sogenanntes Cookie, das auf einem empfangenden Rechnersystem gespeichert wird, oder damit vergleichbare Mittel (d.h. Daten und Verfahren) verwendet werden. Die Speicherung der den verletzten Datenübertragungsgrenzwert angebenden Daten kann alternativ oder zusätzlich auf einem Rechnersystem erfolgen, von dem die ersten Daten übertragen werden.

Bei einer bevorzugten Ausführungsform des erfindungsgemäßen Verfahrens werden zum Übertragen der ersten Daten und, falls überhaupt erforderlich, zum Übertragen der zweiten Daten Daten von einem sogenannten Server über das Netzwerk zu einem sogenannten Client übertragen.

Insbesondere ist es vorgesehen, dass als Server ein Adserver verwendet wird. Unter einem Adserver ist ein Rechnersystem zu verstehen, das Werbemaßnahmen steuert, die unter Verwendung von Webpages vermittelt werden sollen. Ein Adserver steuert zum Beispiel auf welchen Webpages Banner erscheinen sollen, die Häufigkeit, mit der Werbemaßnahmen durchgeführt werden, etc.

Bei einer bevorzugten Ausgestaltung der zuletzt genannten Ausführungsformen wird das erfindungsgemäße Verfahren unter Steuerung des Servers ausgeführt. In diesem Fall wird ferner bevorzugt, dass zum Ausführen des erfindungsgemäßen Verfahrens ein sogenanntes Servlet verwendet wird.

Bei einer weiteren bevorzugten Ausgestaltung der zuletzt genannten Ausführungsform wird das erfindungsgemäße Verfahren unter Steuerung des Clients durchgeführt, wobei hier ein Webbrowser und/oder ein Plug-In verwendet werden kann.

Insbesondere ist es bevorzugt, dass bei der Durchführung des erfindungsgemäßen Verfahrens die ersten Daten und, gegebenenfalls, die zweiten Daten über ein Netzwerk übertragen werden, das das Internet umfasst.

Wird das erfindungsgemäße Verfahren unter Steuerung des Servers ausgeführt, können die ersten Daten und, gegebenenfalls, die zweiten Daten von dem Server zu dem Client übertragen werden. Auf diese Weise ist es möglich, neben beispielsweise der auf der Übertragungsstrecke zwischen dem Server und dem Client zur Verfügung stehenden Bandbreite, auch Größen zu berücksichtigen, die durch technische Eigenschaften und/oder Betriebszustände des Servers bedingt sind und die Datenübertragungsqualität beeinflussen können.

Die Verwendung des Clients zur Durchführung des erfindungsgemäßen Verfahrens hat den Vorteil, dass, neben beispielsweise der durch die Übertragungsstrecke zwischen dem Server und dem Client bereitgestellten Bandbreite, Größen berücksichtigt werden, die durch technische Eigenschaften und/oder Betriebszustände des Clients bedingt sind und die Datenübertragungsqualität beeinflussen können. Es ist beispielsweise möglich, dass die durch die Übertragungsstrecke zwischen dem Server und dem Client bereitgestellte Bandbreite ausreicht, um die ersten Daten in gewünschter Weise zu übertragen. Ist dabei der Client aber nicht in der Lage, empfangene Teile oder Datenmengen der ersten Daten schnell genug zu verarbeiten, können beispielsweise die empfangenen Daten nicht schnell genug dargestellt werden, führt dies trotz ausreichender Datenübertragungsqualität zu einer Verletzung des Datenübertragungsgrenzwerts. Da in diesem Falle die Datenübertragungsqualität durch den Client selbst beeinträchtigt wird, könnte dies, wenn überhaupt, durch den Server nur hohem Aufwand festgestellt werden; dies würde zu Verzögerungen bei Datenübertragungen zwischen dem Server und dem Client führen.

Ferner stellt die vorliegende Erfindung ein Computerprogrammprodukt bereit, das Programmcodeteile zur Ausführung einer, mehrere oder aller oben beschriebenen Ausführungsformen des erfindungsgemäßen Verfahrens umfasst.

Vorzugsweise umfasst das erfindungsgemäße Computerprogrammprodukt Programmcodeteile, die als JavaScript®, als Jscript® oder in einer dazu kompatiblen Form ausgeführt sein können.

### Kurzbeschreibung der Figuren

In der folgenden Beschreibung bevorzugter Ausführungsformen wird auf die beigefügten Figuren Bezug genommen, von denen zeigen:

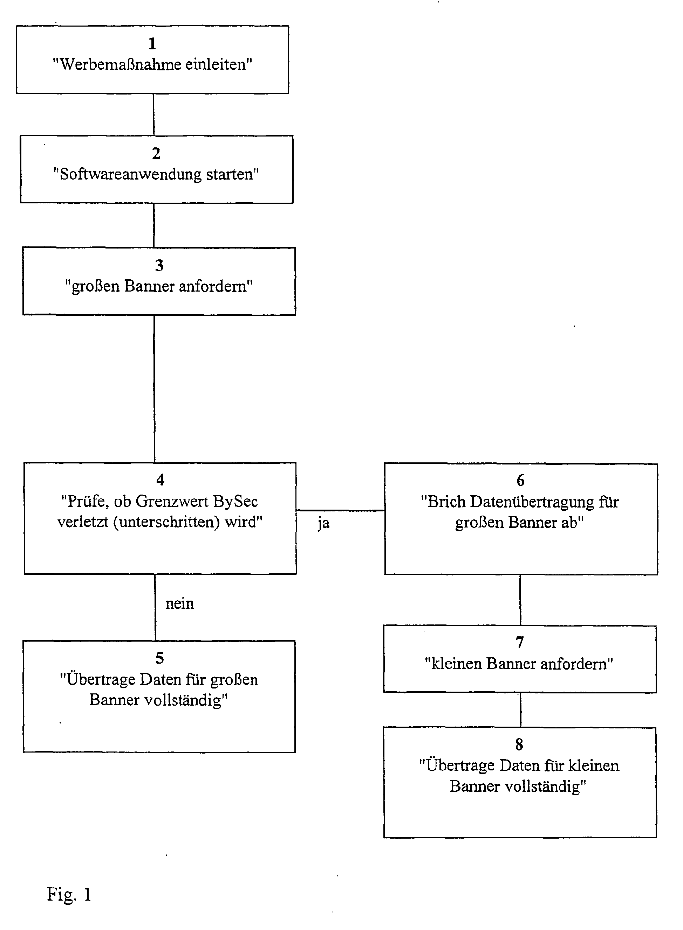

- Fig. 1 bis 4: schematische Darstellungen bevorzugter Ausführungsformen des erfindungsge- mäßen Verfahrens.

### Beschreibung bevorzugter Ausführungsformen

Im Folgenden werden bevorzugte Ausführungsformen am Beispiel eines Szenarios beschrieben, in dem Banner von einem Server zu einem Computersystem übertragen werden sollen.

Üblicherweise erfolgt Übertragung eines Banners von einem Server zu einem Computersystem unter Steuerung von Daten, die zum Beispiel in Form eines HTML-Files vorliegen, das in Daten einer Webpage eingebunden ist, auf die mittels des Computersystems zugegriffen wird. Alternativ hierzu ist es möglich, dass ein Banner von dem Server zu dem Computersystem in Antwort auf eine Eingabe seitens des Benutzers des Computersystems übertragen wird. Derartige Ereignisse werden im Folgenden als auslösende Ereignisse bezeichnet.

Um die eingangs genannten Probleme zu vermeiden, werden bei der herkömmlichen Vorgehensweise Banner verwendet, die eine vorgegebene Größe bzw. Datenmenge nicht überschreiten dürfen, um zu vermeiden, dass es bei der Übertragung von Bannern und deren Darstellung mittels des Computersystems nicht zu für den Benutzer unerwünschten Verzögerungen kommt. Daher werden in Antwort auf ein auslösendes Ereignis, das die Durchführung einer Werbemaßnahme einleitet, unabhängig davon, mittels welchem Computersystem dieses Ereignis ausgelöst wird, immer ein und derselbe Banner übertragen.

Bei den im Folgenden beschriebenen Ausführungsformen werden die auslösenden Ereignisse verwendet, die bei auch herkömmlicher Vorgehensweise zur Übertragung von Bannern führen, z.B. "webpage"-gesteuerte oder benutzergesteuerte Anforderung von Bannern. Daher sind zur Anwendung der vorliegenden Erfindung, abgesehen von ihrer Verwendung, keine Modifikationen der üblichen Vorgehensweise und der damit verbundenen Verfahren erforderlich.

Allerdings werden bei der vorliegenden Erfindung in Antwort auf ein auslösendes Ereignis, dass zur Durchführung einer Werbemaßnahme führen soll, nicht standardmäßig die gleichen Banner zu einem anfragenden Computersystem übertragen. Vielmehr ermöglicht es die vorliegende Erfindung, in Abhängigkeit von der aktuellen Datenübertragungsqualität zwischen dem Server und dem Computersystem unterschiedliche Banner zu übertragen.

### Dies hat mehrere Vorteile.

Um zu prüfen, welcher Banner tatsächlich zu dem Computersystem übertragen werden soll, wird eine Bestimmung der Datenübertragungsqualität durchgeführt, die bei der Übertragung von Bannerdaten zur Verfügung steht.

Des weiteren können Verzögerungen, die bei der oben beschriebenen Verwendung von Testdaten und dergleichen auftreten, durch die vorliegende Erfindung vermieden werden. Kommt es nämlich bei der Übertragung der Daten für den ersten Banner nicht zu einer Verletzung des Grenzwerts, wird die Übertragung der Daten für den ersten Banner fortgesetzt. Dementsprechend erfolgt in diesem Fall die Übertragung des ersten Banners ohne Verzögerung.

Kommt es bei der Übertragung von Daten des ersten Banners zu einer Verletzung des Grenzwerts, können Verzögerungen hinsichtlich des zweiten Banners vermieden werden, indem der Abbruch der Datenübertragung für den ersten Banner schnell erfolgt, also indem die Zeitdauer möglichst klein gewählt wird, während der die Datenübertragungsqualität bestimmt wird.

Eine weitere Optimierung ist möglich, wenn eine oder mehrere der im Folgenden beschriebenen Ausführungsformen in Abhängigkeit davon verwendet werden, welche Datenübertragungsqualität zwischen dem Server und dem Computersystem zu erwarten ist.

Ist beispielsweise davon auszugehen, dass eine hohe Datenübertragungsqualität vorliegt, kann eine Ausführungsform verwendet werden, die im ersten Schritt eine Übertragung eines großen Banners bewirkt, der dann normalerweise auch vollständig ohne Zeitverzögerung übertragen wird. Nur für den Fall, dass die angenommene Datenübertragungsqualität nicht zu Verfügung steht, wird die Übertragung eines kleinen Banners eingeleitet. Entsprechendes gilt für den Fall, dass von einer niedrigen Datenübertragungsqualität auszugehen ist.

Diese Vorgehensweisen können auch kombiniert werden, wenn beispielsweise anfänglich von einer hohen Datenübertragungsqualität auszugehen ist, aber bei Datenübertragungen zwischen dem Server und dem Computersystem festgestellt wird, dass die vorhandene Datenübertragungsqualität unzureichend ist, also mehrmals, häufig oder regelmäßig zum Abbruch von Datenübertragung für erste Banner führt. Um die daraus resultierenden Verzögerungen bei Datenübertragungen für zweite Banner zu vermeiden, kann dann eine Ausführungsform der Softwareanwendungen verwendet werden, die im ersten Schritt jeweils einen kleinen Banner anfordert und nur dann eine Übertragung großer Banner bewirkt, wenn die Datenübertragungsqualität hierfür ausreicht. Entsprechendes gilt für den Fall, das anfänglich von einer niedrigen Datenübertragungsqualität auszugehen ist.

Um diese Möglichkeiten nutzen zu können, ist es vorteilhaft, wenn die hierfür benötigten unterschiedlichen Ausführungsformen der Softwareanwendungen auf dem Computersystem vorliegen, um in Abhängigkeit der zur Verfügung stehenden Datenübertragungsqualität ausgeführt werden zu können.

Zur Veranschaulichung der hier beschriebenen Ausführungsformen wird auf eine Anwendung der vorliegenden Erfindung im Bereich des Internets Bezug genommen und folgende Annahmen getroffen:
Als Client wird ein über das Internet kommunizierendes Computersystem eines Benutzers verwendet, auf dem ein Webbrowser und Plug-In für sogenannte Flash®-Banner (s.u.) ausgeführt werden.
Das Plug-In fordert eine in Flash® MX programmierter SWF®-Softwareanwendung von einem Server (s.u.) an, die zu der Version 5 von Flash® kompatibel ist und Softwarecode zur Durchführung des erfindungsgemäßen Verfahrens umfasst.
Mittels eines Adservers eines Internet-Dienstleisters werden für den Benutzer vorgesehene Werbemaßnahmen gesteuert, die in Form von Bannern auf einem Monitor des Computersystems dargestellt werden sollen.
Daten für Banner werden von einem Image-Server des oder eines anderen Internet-Dienstleisters zu dem Computersystem übertragen.

Aufgrund ihrer Eigenschaft, die Datenübertragungsqualität zwischen dem Image-Server und dem Computersystem zu ermitteln, kann die Softwareanwendung auch als "Speed Sniffer" (Geschwindigkeitsschnüffler) bezeichnet werden.

Die Softwareanwendung wird zu dem Computersystem übertragen werden, indem während der Ausführung des Webbrowsers auf dem Computersystem von einem Server Daten, z.B. in Form einer HTML-Javascript-Datei, an das Computersystem übermittelt werden, die bewirken, dass die Softwareanwendung angefordert und zu dem Computersystem übertragen wird. Dies erfolgt beispielsweise durch eine Anfrage von dem Plug-In des Computersystems an den Image-Server, der in Antwort darauf die Softwareanwendung zu dem Computersystem überträgt.

Bei den hier beschriebenen Ausführungsformen umfasst die Softwareanwendung folgenden Softwarecode:

```
<SCRIPT LANGUAGE="JavaScript1.1">
 var clickurl = "http://web.de"

 if (showFlashStatus())
 {
 document.writeln
 ('<embedsrc=
     "http://www.web.de/sniffer.swf?
      data_1=http://www.web.de/dsl200x300.swf &bytes=BySec
      &
      data_2=http://www.web.de/isdn200x300.swf "quality=QL
 type="application/x-shockwave-flash"
      width="W"
      height="H">
 </EMBED>');
 FlashOk = true;
 }

 function ClickThru() { window.open(clickurl);}

 </SCRIPT>
```

Wobei für Variablen des Softwarecodes Folgendes gilt:
- data_1:: Verweist auf einen erstes Flashfile, das zur Darstellung eines ersten Banners auf dem Monitor des Computersystems dient.
- data_2:: Verweist auf einen zweites Flashfile, das zur Darstellung eines zweiten Banners auf dem Monitor des Computersystems dient.
- BySec:: Definiert einen Grenzwert in Bytes pro Sekunde, bei dessen Verletzung die Übertragung des ersten Flashfiles unterbrochen und das zweite Flashfile übertragen wird.

Allgemein läuft das erfindungsgemäße Verfahren wie folgt ab:

Soll für den Benutzer des Computersystems eine Werbemaßnahme in Form eines auf dem Monitor des Computersystems darstellbaren Banners durchgeführt werden, erfolgt dies im Gegensatz zu der herkömmlichen Vorgehensweise nicht durch eine Übertragung eines standardmäßig vorgegebenen Banners von dem Image-Server zu dem Computersystem. Vielmehr wird hier die Durchführung der Werbemaßnahme durch die Softwareanwendung so gesteuert, dass Banner in Abhängigkeit der Datenübertragungsqualität verwendet werden, die bei der Übertragung von Bannern wiedergebenden Daten von dem Image-Server zu dem Computersystem zur Verfügung steht.

Die Softwareanwendung ermittelt unter Verwendung des obigen Softwarecodes, der auch als Action-Script bezeichnet wird, die Datenübertragungsqualität zwischen dem Image-Server und dem Computersystem in Bytes pro Sekunde. In Abhängigkeit der Datenübertragungsqualität wird dann bestimmt, welche Banner (Flashfiles) zu dem Computersystem übertragen wird, so dass dort der entsprechende Banner in gewünschter Weise wiedergegeben werden kann.

Dabei wird in Antwort auf ein Ereignis, das die Übertragung eines Banners einleiten soll, die Softwareanwendung ausgeführt, die in einem ersten Schritt die Übertragung des ersten Banners data_1 von dem Image-Server zu dem Computersystem bewirkt.

Wird bei dieser Übertragung festgestellt, dass innerhalb einer vorbestimmten Zeitdauer, z.B. eine, zwei oder mehr Sekunden, von dem Image-Server zu dem Computersystem eine Datenmenge übertragen wird, die kleiner (größer) als die durch den Grenzwert BySec vorgegebene Datenmenge ist, bricht die Softwareanwendung die Übertragung des ersten Banners ab und bewirkt die Übertragung des zweiten Banners. Der zweite Banner wird dann vollständig zu dem Computersystem übertragen und kann auf dessen Monitor wiedergegeben werden.

Wird innerhalb der vorbestimmten Zeitdauer festgestellt, dass die von dem Image-Server zu dem Computersystem übertragene Datenmenge größer (kleiner) als die durch den Grenzwert BySec vorgegebene Datenmenge ist, wird die Übertragung des ersten Banners nicht unterbrochen, sondern vollständig durchgeführt; dann kann der erste Banner auf dem Monitor des Computersystems wiedergegeben werden.

Alternativ ist es zur Bestimmung der Datenübertragunsqualität möglich, eine vorbestimme Datenmenge zu definieren und die Zeit zu erfassen, die benötigt wird, um bei der Übertragung der Daten für den ersten Banner diese Datenmenge zu übertragen.

Wird bei der Übertragung von Daten für den ersten Banner festgestellt, dass die vorgegebene Datenmenge innerhalb einer Zeitdauer von dem Image-Server zu dem Computersystem übertragen wird, die größer (kleiner) als eine durch einen zeitlichen Grenzwert vorgegebene Zeitdauer ist, bricht die Softwareanwendung die Übertragung des ersten Banners ab und bewirkt die Übertragung des zweiten Banners. Der zweite Banner wird dann vollständig zu dem Computersystem übertragen und kann auf dessen Monitor wiedergegeben werden.

Wird bei der Übertragung von Daten für den ersten Banner für die Übertragung der vorgegebenen Datenmenge eine Zeitdauer benötigt, die kleiner (größer) als die vorgegebene Zeitdauer ist, wird die Übertragung des ersten Banners nicht unterbrochen, sondern vollständig durchgeführt; dann kann der erste Banner auf dem Monitor des Computersystems wiedergegeben werden.

Hierbei wird eine von Flash^{®} bereitgestellte Funktionalität verwendet, die es ermöglicht, die als Laden bezeichnete Übertragung von Daten für Banner zu unterbrechen. Diese Funktionalität wird als "Unload Movie" bezeichnet und erlaubt es, eine zum Laden eines Banners erfolgte Anfrage (ein sogenannter Request) während der Bearbeitung ("on the flight") abzubrechen.

In Tests wurden für Computersysteme, die mittels eines DSL-Modems über das Internet kommunizieren können, Datenmengen bestimmt, die innerhalb einer vorgegebenen Zeitdauer von zwei Sekunden übertragen werden. Dabei wurde ein Mittelwert von 195455 Bytes innerhalb von zwei Sekunden ermittelt, wobei der schlechteste ermittelte Wert bei ca. 110000 Bytes innerhalb von zwei Sekunden lag.

Unter Bezugnahme auf Fig. 1 wird die Ausführungsform beschrieben, bei der im ersten Schritt die Übertragung von Daten für einen großen Banner eingeleitet und gegebenenfalls Daten für einen kleinen Banner übertragen werden.

Tritt ein Ereignis ein, das die Durchführung einer Werbemaßnahme mittels eines auf dem Computersystem darzustellenden Banners einleitet (Schritt 1), wird die Softwareanwendung ausgeführt (Schritt 2). Die Softwareanwendung fordert dann von dem Image-Server Daten eines für die durchzuführende Werbemaßnahme vorgesehenen großen Banners an (Schritt 3).

Bei der Übertragung von Daten für den großen Banner wird überprüft, ob die innerhalb einer vorbestimmten Zeitdauer nach Beginn der Übertragung übertragenen Daten wenigstens eine vorbestimmte Datenmenge ausmachen, d.h. eine Datenmenge pro Zeit oberhalb des Grenzwerts BySec übertragen wird (Schritt 4).

Ist dies der Fall, wird die Übertragung der Daten für den großen Banner fortgesetzt (Schritt 5). Andernfalls werden die Übertragung der Daten für den großen Banner unterbrochen (Schritt 6) und von dem Image-Server Daten eines für die durchzuführende Werbemaßnahme vorgesehenen kleinen Banners angefordert (Schritt 7), um sie zu dem Computersystem zu übertragen (Schritt 8).

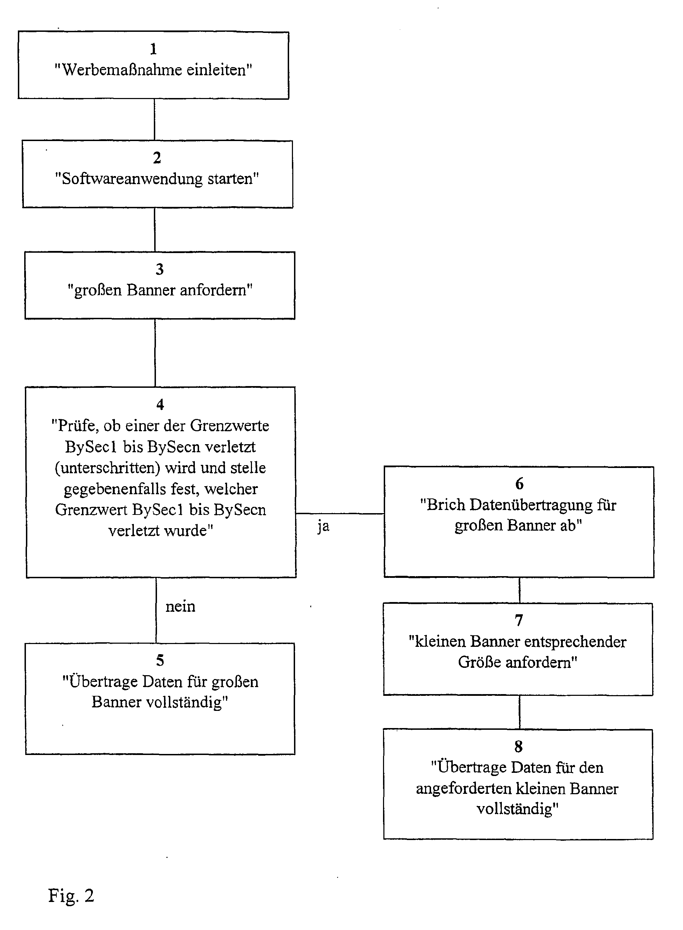

Bei der in Fig. 2 dargestellten Ausführungsform entsprechen die Schritte 1 bis 3 den Schritten 1 bis 3 der Ausführungsform von Fig. 1. Allerdings wird bei der Ausführungsform von Fig. 2 der unter Bezugnahme auf Fig. 1 erläuterte Schritt 4 hinsichtlich wenigstens zweier Grenzwerte BySec1, ... , BySecn durchgeführt. Ferner werden bei dieser Ausführungsform neben dem in Schritt 3 angeforderten großen Banner wenigstens zwei kleine Banner unterschiedlicher Größe verwendet.

Der Einfachheit halber wird davon ausgegangen, dass der größte Grenzwert BySec1 dem Grenzwert der Ausführungsform von Fig. 1 entspricht und die weiteren Grenzwerte BySec2, ... , BySecn unterschiedliche, immer kleiner werdende Werte aufweisen. Ferner wird im Folgenden angenommen, die wenigstens zwei kleinen Banner jeweils einem der Grenzwerte BySec1, ... , BySecn zugeordnet sind, wobei der größte kleine Banner dem kleinen Banner der Ausführungsform von Fig. 1 entspricht und alle weiteren kleinen Banner unterschiedliche, immer kleinere Größen aufweisen.

Im Schritt 4 wird überprüft, ob und, wenn ja, welcher der Grenzwerte BySec1, ... , BySecn bei der anfänglichen Übertragung der Daten für den großen Banner verletzt wird.

Wird keiner der Grenzwerte verletzt, wird die Übertragung der Daten für den großen Banner fortgesetzt (Schritt 5). Andernfalls wird die Übertragung der Daten für den großen Banner unterbrochen (Schritt 6).

Bei der dargestellten Ausführungsform wird beginnend bei dem größten Grenzwert BySec1 absteigend bis zu dem kleinsten Grenzwert BySecn überprüft, welcher Grenzwert BySec1, ... , BySecn verletzt wird. In Abhängigkeit des kleinsten verletzten Grenzwerts BySec1, ... , BySecn werden von dem Image-Server Daten eines für die durchzuführende der Werbemaßnahme vorgesehenen Banners entsprechender Größe angefordert (Schritt 7), um sie zu dem Computersystem übertragen (Schritt 8).

Die Ausführungsform von Fig. 2 ermöglicht nicht nur eine genauere Bestimmung der Datenübertragungsqualität, sondern auch eine bezüglich der vorhandenen Datenübertragungsqualität optimierte Auswahl vollständig zu übertragender Banner.

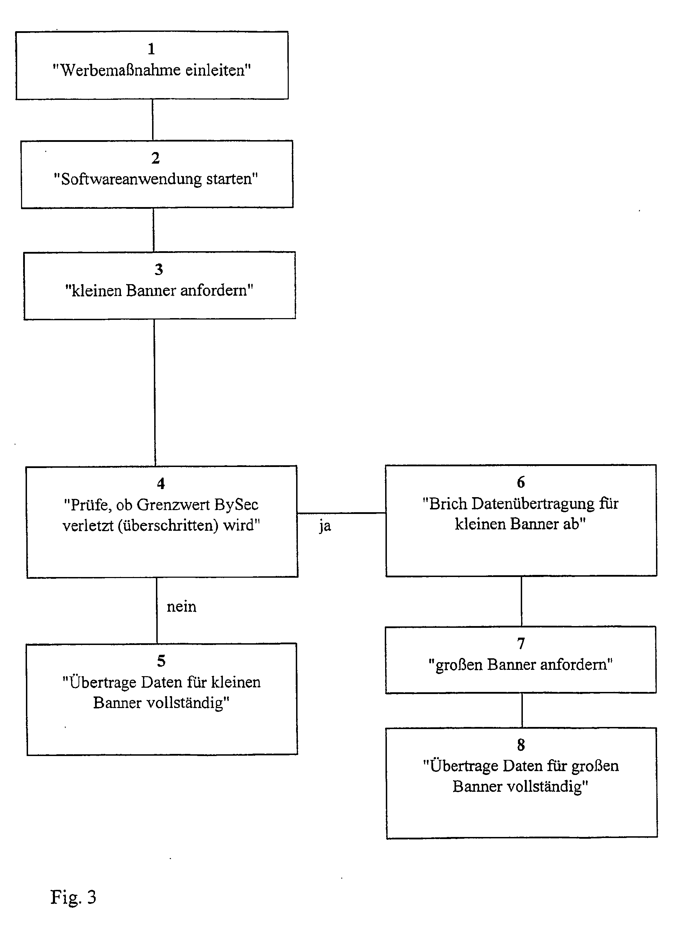

Unter Bezugnahme auf Fig. 3 wird die Ausführungsform beschrieben, bei der im ersten Schritt die Übertragung von Daten für einen kleinen Banner eingeleitet und gegebenenfalls Daten für einen großen Banner übertragen werden.

Tritt ein Ereignis ein, das die Durchführung einer Werbemaßnahme mittels eines auf dem Computersystem darzustellenden Banners einleitet (Schritt 1), wird die Softwareanwendung ausgeführt (Schritt 2). Die Softwareanwendung fordert dann von dem Image-Server Daten eines für die durchzuführende Werbemaßnahme vorgesehenen kleinen Banners an (Schritt 3).

Bei der Übertragung von Daten für den kleinen Banner wird überprüft, ob die innerhalb einer vorbestimmten Zeitdauer nach Beginn der Übertragung übertragenen Daten höchstens eine vorbestimmte Datenmenge ausmachen, d.h. eine Datenmenge pro Zeit unterhalb des Grenzwerts BySec übertragen wird (Schritt 4).

Ist dies der Fall, wird die Übertragung der Daten für den kleinen Banner fortgesetzt (Schritt 5). Andernfalls werden die Übertragung der Daten für den kleinen Banner unterbrochen (Schritt 6) und von dem Image-Server Daten eines für die durchzuführende Werbemaßnahme vorgesehenen großen Banners angefordert (Schritt 7), um sie zu dem Computersystem zu übertragen (Schritt 8).

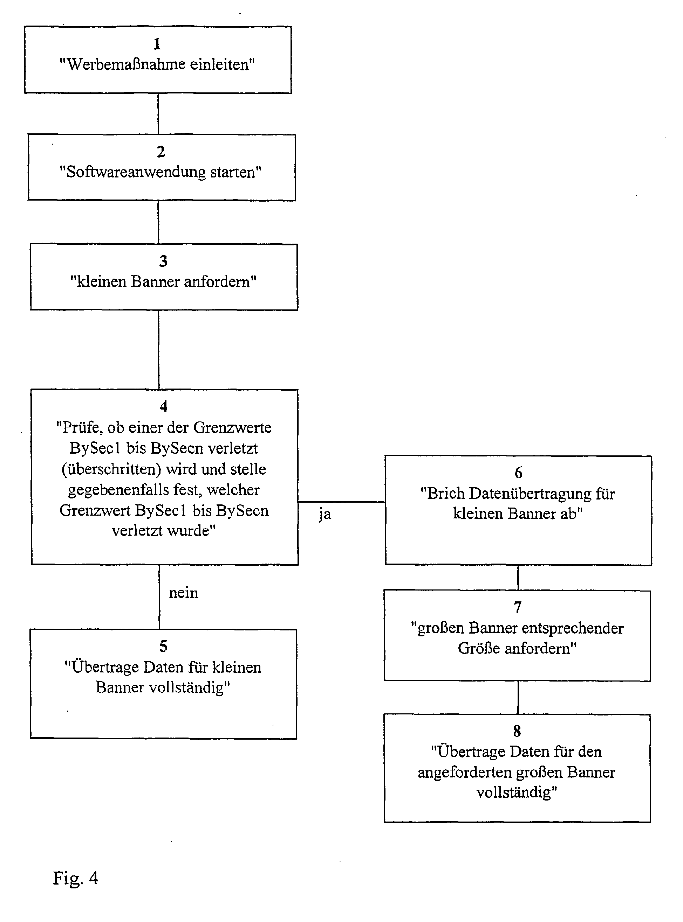

Bei der in Fig. 4 dargestellten Ausführungsform entsprechen die Schritte 1 bis 3 den Schritten 1 bis 3 der Ausführungsform von Fig. 3. Allerdings wird bei der Ausführungsform von Fig. 4 der unter Bezugnahme auf Fig. 3 erläuterte Schritt 4 hinsichtlich wenigstens zweier Grenzwerte BySec1, ... , BySecn durchgeführt. Ferner werden bei dieser Ausführungsform neben dem in Schritt 3 angeforderten kleinen Banner wenigstens zwei große Banner unterschiedlicher Größe verwendet.

Der Einfachheit halber wird davon ausgegangen, dass der kleinste Grenzwert BySec1 dem Grenzwert der Ausführungsform von Fig. 3 entspricht und die weiteren Grenzwerte BySec2, ... , BySecn unterschiedliche, immer größer werdende Werte aufweisen. Ferner wird im Folgenden angenommen, die wenigstens zwei großen Banner jeweils einem der Grenzwerte BySec1, ... , BySecn zugeordnet sind, wobei der kleinste große Banner dem großen Banner der Ausführungsform von Fig. 3 entspricht und alle weiteren großen Banner unterschiedliche, immer größere Größen aufweisen.

Im Schritt 4 wird überprüft, ob und, und wenn ja, welcher der Grenzwerte BySec1, ... , BySecn bei der anfänglichen Übertragung der Daten für den kleinen Banner verletzt wird.

Wird keiner der Grenzwerte verletzt, wird die Übertragung der Daten für den kleinen Banner fortgesetzt (Schritt 5). Andernfalls wird die Übertragung der Daten für den kleinen Banner unterbrochen (Schritt 6).

Bei der dargestellten Ausführungsform wird beginnend bei dem kleinsten Grenzwert BySec1 aufsteigend bis zu dem größten Grenzwert BySecn überprüft, welcher Grenzwert BySec1, ... , BySecn verletzt wird. In Abhängigkeit des größten verletzten Grenzwerts BySec1, ... , BySecn werden von dem Image-Server Daten eines für die durchzuführende der Werbemaßnahme vorgesehenen Banners entsprechender Größe angefordert (Schritt 7), um sie zu dem Computersystem übertragen (Schritt 8).

Die Ausführungsform von Fig. 4 ermöglicht nicht nur eine genauere Bestimmung der Datenübertragungsqualität, sondern auch eine bezüglich der vorhandenen Datenübertragungsqualität optimierte Auswahl vollständig zu übertragender Banner.

Bei allen Ausführungsformen ist es nach einem Abbruch einer Übertragung von Daten für einen ersten Banner möglich, die bis dahin übertragenen Daten zu verwerfen und Daten zu übertragen, die für den zweiten Banner insgesamt erforderlich sind. Alternativ ist es möglich, die bis zum Abbruch bereits übertragenen Daten nicht zu verwerfen, sondern für die Wiedergabe des zweiten Banners zu verwenden. Hierbei ist der zweite Banner so zu gestalten, dass er aus den Daten für den zweiten Banner in Kombination mit Daten für den ersten Banner aufgebaut bzw. wiedergegeben werden kann; insbesondere können hier eine erste Datenmenge der Daten für den ersten Banner verwendet werden, die bei Übertragung der Daten für den ersten Banner zuerst zu übertragen sind.

Bei der Festlegung, welche und wie viele Daten der Daten für den ersten Banner bei dem zweiten Banner verwendet werden sollen, kann eine zu erwartende Datenübertragungsqualität zu Grunde gelegt werden, um sicherzustellen, dass nach einem Abbruch einer Übertragung von Daten für den ersten Banner die für den zweiten Banner benötigten Daten übertragen wurden. Dies ist insbesondere vorteilhaft, wenn die Ausführungsform verwendet wird, bei der zur Bestimmung der Datenübertragungsqualität die während einer vorgegebenen Zeitdauer übertragene Datenmenge ermittelt wird. Vorteilhafter ist es hier allerdings, die Ausführungsform zu verwenden, bei der zur Bestimmung der Datenübertragungsqualität die Zeitdauer für eine Übertragung einer vorgegebenen Datenmenge ermittelt wird. Dies gewährleistet nämlich, dass bei der Übertragung von Daten für den ersten Banner unabhängig von einem Abbruch immer eine vorgegebene Datenmenge übertragen wird, die dann gegebenenfalls für den zweiten Banner verwendet werden kann; es wird also vermieden, dass aufgrund eines Abbruchs der Übertragung von Daten für den ersten Banner Daten nicht übertragen werden, die bei dem zweiten Banner benötigt werden.

Um auf eine zu einem früheren Zeitpunkt ermittelte Datenübertragungsqualität zurückgreifen zu können, ist es möglich, entsprechende Daten zu speichern. Dies kann z.B. mittels eines auf dem Computersystem zu speichernden Cookies erfolgen. Auf dieses kann zugegriffen werden, um nachfolgende Datenübertragungen von und zu dem Computersystem entsprechend anzupassen. Dies hat den Vorteil, dass auch bei Datenübertragungen, bei denen die vorliegende Erfindung nicht verwendet wird, eine Optimierung hinsichtlich der Datenübertragungsqualität erfolgen kann. Ferner können eine ermittelte Datenübertragungsqualität angebende Daten verwendet werden, um eine auf eine zu erwartende Datenübertragungsqualität zu schließen und, wie oben ausgeführt, eine entsprechende Ausführungsform der Softwareanwendung zu wählen.

Bei den oben beschriebenen Ausführungsformen ist es vorgesehen, das erfindungsgemäße Verfahren bei jeder durchzuführenden Werbemaßnahme zu verwenden. Dies ist einerseits erforderlich, um Datenübertragungen an die vorhandene Datenübertragungsqualität anzupassen und hat andererseits den Vorteil, die bei Datenübertragungen zeitgleich zur Verfügung stehende Datenübertragungsqualität zu ermitteln. Davon abweichend ist es möglich, das erfindungsgemäße Verfahren zu bestimmen Zeitpunkten und/oder in bestimmten Zeitabständen durchzuführen und ansonsten Anpassungen von Datenübertragungen an die Datenübertragungsqualität auf der Grundlage von Daten durchzuführen, die eine zuvor ermittelte Datenübertragungsqualität angeben. Derartige Daten können beispielsweise in Form eines Cookies gespeichert werden, das es ermöglicht, festzustellen, ob und, wenn ja, eine Datenübertragungsqualität ermittelt wurde und festzulegen, ob, wann und wie oft das erfindungsgemäße Verfahren angewendet werden soll.

Die Speicherung von Daten, die eine zuvor ermittelte Datenübertragungsqualität angeben, erlaubt es auch, mehrere mit dem erfindungsgemäße Verfahren ermittelte Datenübertragungsqualitäten statistisch auszuwerten, um z.B. genauere Aussagen über eine zu erwartende Datenübertragungsqualität machen zu können.

## Patentansprüche

1. Verfahren, bei dem bei einem Übertragen erster Daten zur Wiedergabe an einen Empfänger über ein Netzwerk das Übertragen der ersten Daten abgebrochen und durch ein Übertragen zweiter Daten zur Wiedergabe an den Empfänger ersetzt wird, wenn beim Übertragen der ersten Daten ein Datenübertragungsgrenzwert verletzt wird, wobei die bereits übertragenen ersten Daten für die Wiedergabe der zweiten Daten verwendet werden.

2. Verfahren nach Anspruch 1, bei dem das Übertragen der ersten Daten fortgesetzt wird, wenn der Datenübertragungsgrenzwert nicht verletzt wird.

3. Verfahren nach Anspruch 1 oder 2, bei dem
- wenigstens zwei Datenübertragungsgrenzwerte vorgegeben werden,
- wenigstens zwei zweite Daten, insbesondere wenigstens zwei Datenpakete, vorgegeben werden und jeweils einem der Datenübertragungsgrenzwerte zugeordnet werden;
- geprüft wird, welcher der wenigstens zwei Datenübertragungsgrenzwerte beim Übertragen der ersten Daten verletzt wird, und
- von den wenigstens zwei zweiten Daten, insbesondere von den wenigstens zwei Datenpaketen, in Abhängigkeit des verletzten Datenübertragungsgrenzwerts diejenigen zweiten Daten zum Übertragen ausgewählt werden, die dem verletzten Datenübertragungsgrenzwert zugeordnet sind, insbesondere dasjenige Datenpaket zum Übertragen ausgewählt wird, das dem verletzten Datenübertragungsgrenzwert zugeordnet ist.

4. Verfahren nach einem der Ansprüche 1 bis 3, bei dem der verletzte Datenübertragungsgrenzwert angibt, dass beim Übertragen der ersten Daten innerhalb einer vorgegebenen Zeitdauer eine Datenmenge übertragen wird, die kleiner als eine vorgegebene Datenmenge ist.

5. Verfahren nach einem der Ansprüche 1 bis 3, bei dem der verletzte Datenübertragungsgrenzwert angibt, dass beim Übertragen der ersten Daten das Übertragen einer von den ersten Daten umfassten vorgegebenen Datenmenge eine vorgegebene Zeitdauer überschritten hat.

6. Verfahren nach Anspruch 4 oder 5, bei dem
die ersten Daten eine größere Datenmenge als die zweiten Daten umfassen.

7. Verfahren nach einem der Ansprüche 1 bis 3, bei dem der verletzte Datenübertragungsgrenzwert angibt, dass beim Übertragen der ersten Daten innerhalb einer vorgegebenen Zeitdauer eine Datenmenge übertragen wurde, die größer als eine vorgegebene Datenmenge ist.

8. Verfahren nach einem der Ansprüche 1 bis 3, bei dem der verletzte Datenübertragungsgrenzwert angibt, dass beim Übertragen der ersten Daten das Übertragen einer von den ersten Daten umfassten vorgegebenen Datenmenge eine vorgegebene Zeitdauer unterschritten hat.

9. Verfahren nach Anspruch 7 oder 8 bei dem
die ersten Daten eine kleinere Datenmenge als die zweiten Daten umfassen.

10. Verfahren nach einem der Ansprüche 1 bis 9 , bei dem die ersten Daten einen ersten Banner und die zweiten Daten einen zweiten Banner angeben, wobei als Banner Flash-Banner verwendet werden.

11. Verfahren nach einem der vorherigen Ansprüche, bei dem Daten, die den verletzten Datenübertragungsgrenzwert charakterisieren, gespeichert werden, insbesondere als Cookie gespeichert werden.

12. Verfahren nach einem der vorherigen Ansprüche, bei dem die Daten von einem Server zu einem Client übertragen werden.

13. Verfahren nach Anspruch 11, bei dem das Verfahren unter Steuerung des Servers aufgeführt wird

14. Verfahren nach Anspruch 13, bei dem zum Ausführen des Verfahrens ein Servlet verwendet wird.

15. Verfahren nach Anspruch 12, bei dem das Verfahren unter Steuerung des Clients aufgeführt wird.

16. Verfahren nach Anspruch 15, bei dem zum Ausführen des Verfahrens ein Webbrowser verwendet wird.

17. Verfahren nach Anspruch 15 oder 16, bei dem zum Ausführen des Verfahrens ein Plug-In verwendet wird

18. Verfahren nach einem der vorherigen Ansprüche, bei dem die Daten über das Internet übertragen werden.

19. Computerprogrammprodukt, mit
Programmcodeteilen zur Ausführung der Schritte nach einem der Ansprüche 1 bis 18

20. Computerprogrammprodukt nach Anspruch 19, bei dem
die Programmcodeteile ein JavaScript®, ein Jscript® oder dazu kompatibles Programm umfassen.

21. Computerprogrammprodukt nach Anspruch 19 oder 20, das auf einem computerlesbaren Speichermedium oder in einer computerlesbaren Speichereinrichtung gespeichert ist.

22. Verfahren nach den Ansprüchen 4 bis 9, wobei die vorgegebene Datenmenge einen ersten Banner und die zweiten Daten in Kombination mit der übertragenen Datenmenge einen zweiten Banner angeben.

## Claims

1. Method in which,
during a transmission of first data for playback to a receiver over a network, the transmission of the first data is interrupted and replaced by a transmission of second data for playback to the receiver if a data transmission limit value is infringed during the transmission of the first data, wherein the already-transmitted first data are used for playing back the second data.

2. Method according to claim 1 in which
the transmission of the first data is continued if the data transmission limit value is not infringed.

3. Method according to claim 1 or 2 in which
- at least two data transmission limit values are predefined,
- at least two second data, in particular at least two data packets, are predefined and in each case are assigned to one of the data transmission limit values;
- it is checked which of the at least two data transmission limit values is infringed during the transmission of the first data, and
- of the at least two second data, in particular of the at least two second data packets, depending on the infringed data transmission limit value, those second data which are allocated to the infringed data transmission limit value are chosen for transmission, in particular that data packet which is allocated to the infringed data transmission limit value is selected for transmission.

4. Method according to one of claims 1 to 3 in which the infringed data transmission limit value indicates that, during the transmission of the first data, within a predefined period of time, a quantity of data is transmitted which is smaller than a predefined quantity of data.

5. Method according to one of claims 1 to 3 in which the infringed data transmission limit value indicates that, during the transmission of the first data the transmission of a quantity of data comprised by the first data has exceeded a predefined period of time.

6. Method according to claim 4 or 5 in which the first data comprise a greater quantity of data than the second data.

7. Method according to one of claims 1 to 3 in which the infringed data transmission limit value indicates that, during the transmission of the first data, within a predefined period of time a quantity of data has been transmitted which is greater than a predefined quantity of data.

8. Method according to one of claims 1 to 3 in which the infringed data transmission limit value indicates that, during the transmission of the first data, the transmission of a quantity of data predefined by the first data has lasted for less than a predefined period of time.

9. Method according to claim 7 or 8 in which the first data comprise a smaller quantity of data than the second data.

10. Method according to one of claims 1 to 9 in which the first data indicate a first banner and the second data indicate a second banner, Flash banners being used as banners.

11. Method according to one of the previous claims in which data which characterize the infringed data transmission limit value are stored, in particular are stored as cookies.

12. Method according to one of the previous claims in which the data are transmitted from a server to a client.

13. Method according to claim 11 in which the method is executed with server control.

14. Method according to claim 13 in which a servlet is used to execute the method.

15. Method according to claim 12 in which the method is executed with client control.

16. Method according to claim 15 in which a web browser is used to execute the method.

17. Method according to claim 15 or 16 in which a plug-in is used to execute the method.

18. Method according to one of the previous claims in which the data are transmitted over the Internet.

19. Computer-program product with program-code parts for executing the steps according to one of claims 1 to 18.

20. Computer-program product according to claim 19 in which the program-code parts comprise JavaScript®, a Jscript® or a program compatible therewith.

21. Computer-program product according to claim 19 or 20 which
is stored on a computer-readable storage medium or in a computer-readable storage device.

22. Method according to one of claims 4 to 9 wherein the predefined quantity of data indicates a first banner and the second data indicate a second banner in combination with the first quantity of data.

## Revendications

1. Procédé, dans lequel lors de la transmission de premières données à restituer à un récepteur via un réseau, la transmission des premières données est interrompue et remplacée par une transmission de secondes données à restituer au récepteur, lorsqu'une valeur limite de transmission de données est dépassée lors de la transmission des premières données, les premières données déjà transmises étant utilisées pour la restitution des secondes données.

2. Procédé selon la revendication 1, dans lequel la transmission des premières données est poursuivie lorsque la valeur limite de transmission de données n'est pas dépassée.

3. Procédé selon la revendication 1 ou 2, dans lequel
- au moins deux valeurs limites de transmission de données sont fixées à l'avance ;
- au moins deux secondes données, notamment au moins deux paquets de données, sont fixées à l'avance et sont respectivement associées à une des valeurs limites de transmission de données ;
- on vérifie laquelle des au moins deux valeurs limites de transmission de données est dépassée lors de la transmission des premières données ; et
- lesdites secondes données qui sont associées à la valeur limite de transmission de données dépassée sont choisies pour la transmission parmi les au moins deux secondes données, notamment les au moins deux paquets de données, en fonction de la valeur limite de transmission de données dépassées, le paquet de données qui est associé à la valeur limite de transmission de données dépassée étant notamment choisi pour la transmission.

4. Procédé selon l'une quelconque des revendications 1 à 3, dans lequel la valeur limite de transmission de données dépassée indique que lors de la transmission des premières données dans le cadre d'une durée fixée à l'avance, une certaine quantité de données inférieure à une quantité de données fixée à l'avance est transmise.

5. Procédé selon l'une quelconque des revendications 1 à 3, dans lequel la valeur limite de transmission de données dépassée indique que lors de la transmission des premières données, une certaine quantité de données fixée à l'avance comprenant la transmission des premières données a dépassé une certaine durée.

6. Procédé selon la revendication 4 ou 5, dans lequel les premières données comprennent une plus grande quantité de données que les secondes données.

7. Procédé selon l'une quelconque des revendications 1 à 3, dans lequel la valeur limite de transmission de données dépassée indique que lors de la transmission des premières données comprises dans une durée fixée à l'avance, une certaine quantité de données est transmise qui est supérieure à une quantité de données fixée à l'avance.

8. Procédé selon l'une quelconque des revendications 1 à 3, dans lequel la valeur limite de transmission de données dépassée indique que lors de la transmission des premières données, la transmission d'une quantité de données fixée à l'avance comprenant les premières données a dépassé la durée fixée à l'avance.

9. Procédé selon la revendication 7 ou 8, dans lequel les premières données comprennent une quantité de données moindre que les secondes données.

10. Procédé selon l'une quelconque des revendications 1 à 9, dans lequel les premières données indiquent une première bannière et les secondes données indiquent une seconde bannière, la bannière utilisée étant une bannière clignotante.

11. Procédé selon l'une quelconque des revendications précédentes, dans lequel les données caractérisant la valeur limite de transmission de données dépassée sont mémorisées, notamment mémorisées sous la forme d'un témoin (cookie).

12. Procédé selon l'une quelconque des revendications précédentes, dans lequel les données sont transmises à un client par l'intermédiaire d'un serveur.

13. Procédé selon la revendication 11, dans lequel le procédé est exécuté par commande du serveur.

14. Procédé selon la revendication 13, dans lequel un mini-serveur est utilisé pour exécuter le procédé.

15. Procédé selon la revendication 12, dans lequel le procédé est exécuté par commande du client.

16. Procédé selon la revendication 15, dans lequel un navigateur Internet est utilisé pour exécuter le procédé.

17. Procédé selon la revendication 15 ou 16, dans lequel un module d'extension est utilisé pour exécuter le procédé.

18. Procédé selon l'une quelconque des revendications précédentes, dans lequel les données sont transmises via Internet.

19. Produit de programme informatique, doté de parties de code de programme permettant d'exécuter les étapes selon l'une quelconque des revendications 1 à 18.

20. Produit de programme informatique selon la revendication 19, dans lequel les parties de code de programme comprennent un JavaScript®, un Jscript® ou un programme compatible avec eux.

21. Produit de programme informatique selon la revendication 19 ou 20, qui est mémorisé sur un support de mémoire lisible par un ordinateur ou dans un dispositif de mémoire lisible par un ordinateur.

22. Procédé selon l'une quelconque des revendications 4 à 9, dans lequel la quantité de données fixée à l'avance indique une première bannière et les secondes données indiquent, en combinaison avec la quantité de données transmise, une seconde bannière.
